# EUROPÄISCHE PATENTSCHRIFT

(11) **EP 1 359 097 B1**
(45) Veröffentlichungstag und Bekanntmachung des Hinweises auf die Patenterteilung: **21.03.2007**
(21) Anmeldenummer: 02008659.1
(22) Anmeldetag: 17.04.2002
(51) Int. Cl.: B65D 77/22, B65D 81/34, B65B 55/00, B65B 55/02, B65D 77/20, A23L 3/01

(54) **Ventilverpackung und Verfahren für die Pasteurisation von Lebensmitteln**
Package with overpressure valve and process for the pasteurisation of foods
Sachet comportant une soupape d'équilibrage de pression et procédé de pasteusisation des aliments

(43) Veröffentlichungstag der Anmeldung: 05.11.2003
(73) Patentinhaber: Wipf AG, 8604 Volketswil (CH)
(72) Erfinder: Dimmler, Andreas, CH-8303 Bassersdorf (CH); Schulthess, Markus, CH-8610 Uster (CH)
(74) Vertreter: Betten & Resch

(56) Entgegenhaltungen:
- EP-A- 0 069 264
- EP-A- 0 795 482
- EP-A- 1 188 683
- WO-A-99/32373
- DE-A- 19 843 430
- GB-A- 1 548 244
- US-A- 3 799 427

## Beschreibung

### Gebiet der Erfindung

Die vorliegende Erfindung betrifft eine Ventilverpackung für die Pasteurisation von Lebensmitteln sowie ferner ein Verfahren für die Pasteurisation von Lebensmitteln.

### Hintergrund der Erfindung

Die Pasteurisation von Lebensmitteln ist ein gängiges Verfahren, die Haltbarkeit der Lebensmittel zu erhöhen. Unter Pasteurisation versteht man dabei ein Erhitzen der Lebensmittel, üblicherweise auf eine Temperatur zwischen 70°C und 80°C, um die Keime, die die Haltbarkeit der Lebensmittel negativ beeinflussen könnten, zumindest großteils abzutöten.

Die Pasteurisation erfolgt dabei oft innerhalb einer Vorrichtung, die oft die Form eines "Tunnels" annimmt, man spricht dabei von Tunnelpasteurisation. Dies hat im wesentlichen folgenden Grund.

In den sogenannten "Tunnelpasteurisatoren" werden die Lebensmittel entweder heißem Dampf ausgesetzt, oder sie werden mit einer heißen Flüssigkeit berieselt. Dabei werden die Lebensmittel erhitzt, infolge der Erhitzung entsteht in der Verpackung der Lebensmittel ein Überdruck. Damit die Verpackung der Lebensmittel, die neben dem Lebensmittel grössere Mengen Luft enthält, nicht platzt, muß die Pasteurisation unter Gegendruck (Überdruck) durchgeführt werden, andernfalls besteht die Gefahr der Zerstörung der Verpackung. Um die Ausbildung des Überdrucks zu ermöglichen, wird die Verpackung üblicherweise in einen sogenannten "Tunnel" eingebracht, der mit Schleusen versehen ist und in dem ein entsprechender Überdruck aufgebaut ist. Insbesondere wird die Pasteurisation für Lebensmittel wie Muscheln, Schnecken, servierfähige Gerichte, Gemüse, etc. verwendet.

Eine andere Möglichkeit bestünde darin, die Produkte nach der Pasteurisation nochmals umzuverpacken, da sich die Verpackung unter dem sich im Rahmen der Erhitzung ausbildenden Überdruck entweder verzieht oder ganz zerstört wird.

EP 1 188 683 beschreibt eine Lebensmittelverpackung mit einer Sicherheitsöffnung, die sich öffnet, wenn das Lebensmittel in der Mikrowelle erwärmt wird.

US-3,799,427 beschreibt ein Ausgasungsventil für Lebensmittelverpackungen, bei dem eine Offnungsabdeckung mittels einer Kappe auf die Ventilöffnungen gepresst wird.

GB 1 548 244 beschreibt ein Ventil für Lebensmittelverpackungen, das sich jedoch nicht für Pasteurisationszwecke eignet.

EP 0 795 482 beschreibt eine Lebensmittelverpackung, die sich für den Mikrowellenkochvorgang eignet. Die Verpackung enthält ein Ventil zum Ableiten des Überdrucks, das sich jedoch nach dem Kochvorgang nicht erneut verschließt.

Aus WO 99/32373 ist ebenfalls eine Lebensmittelverpackung für das Mikrowellenkochen offenbart. Sie enthält ein Ventil, das zur Ableitung des beim Kochvorgang entstandenen Überdrucks dient.

Die bisherigen Verfahren zur Pasteurisation von vorverpackten Lebensmitteln sind technisch aufwendig, sie erfordern entweder eine komplizierte Anlagentechnik zum Aufbau des Überdrucks, oder es wird ein nochmaliges Umverpacken erforderlich.
Ein weiterer Nachteil der bisherigen Verfahren ist, dass die Produktion nicht kontinuierlich ist, sondern portionenweise pasteurisiert werden muss.

Es ist daher eine Aufgabe der vorliegenden Erfindung, eine Verpackung und ein Pasteurisationsverfahren zu schaffen, das die Nachteile des Stands der Technik vermeidet.

### Zusammenfassung der Erfindung

Gemäß einem ersten Ausführungsbeispiel umfaßt die Erfindung eine Verpackung zur Aufnahme von Lebensmitteln, gemäß Anspruch 1. Die Verpackung umschließt dabei die Lebensmittel luftdicht, wobei in die Verpackung ein Ventil eingearbeitet ist, das einen Abbau des im Rahmen des Pasteurisationsvorgangs entstehenden Überdrucks nach außen hin ermöglicht. Das Ventil ist ferner so ausgebildet, daß es nach erfolgter Abkühlung und Abbau des Überdrucks sich wieder luftdicht schließt, so daß die Lebensmittelverpackung die dann pasteurisierten Lebensmittel luftdicht umschließt.

Gemäß einem weiteren Ausführungsbeispiel umfaßt die Erfindung ein Verfahren zur Pasteurisation, bei dem die Verpackung gemäß Anspruch 1 mit dem Lebensmittel und dem an der Verpackung angebrachten Ventil in eine Pasteurisationsvorrichtung eingebracht wird, dort der Pasteurisationsvorgang durchgeführt wird, in dessen Rahmen sich ein Überdruck aufbaut, der über das Ventil nach außen hin abgegeben wird, und schließlich eine Abkühlung der Verpackung und der darin befindlichen Lebensmittel erfolgt, wobei das Ventil nach Abbau des Überdrucks und erfolgter Abkühlung wieder vollständig und luftdicht schließt

### Kurze Beschreibung der Zeichnungen

- Fig. 1A: zeigt schematisch ein erstes Ausführungsbeispiel einer Verpackung gemäß der vorliegenden Erfindung.
- Fig. 1B: zeigt schematisch eine Verpackung gemäß einem zweiten Ausführungsbeispiel der vorliegenden Erfindung.
- Figur 2A: zeigt schematisch eine Teildraufsicht auf das gemäss einem Ausführungsbeispiel der Erfindung verwendete Ventil,
- Figur 2B: zeigt schematisch eine Draufsicht auf den Ventilkörper des Ventils gemäß Figur 2A,
- Figur 2C: zeigt schematisch eine Draufsicht auf den Ankerteil des Ventils gemäß Figur 2A,
- Figur 2D: zeigt schematisch eine Schnittansicht des Ventils gemäß Figur 2A, und
- Figur 2E: zeigt schematisch die Einzelheit V aus Figur 2D.
- Fig. 3A: zeigt schematisch eine Draufsicht auf ein Ventil eines weiteren Ausführungsbeispiels der vorliegenden Erfindung.
- Fig. 3B: zeigt schematisch einen Querschnitt eines Ventils gemäß einem weiteren Ausführungsbeispiel der vorliegenden Erfindung.
- Fig. 3C: zeigt schematisch eine Draufsicht auf ein Ventil eines weiteren Ausführungsbeispiels der vorliegenden Erfindung.
- Fig. 3D: zeigt schematisch einen Querschnitt eines Ventils gemäß einem Ausführungsbeispiel der vorliegenden Erfindung nach Fig 3C.
- Fig. 3E: zeigt schematisch eine Draufsicht auf ein Ventil eines weiteren Ausführungsbeispiels der vorliegenden Erfindung.
- Fig. 3F: zeigt schematisch einen Querschnitt eines Ventils gemäß einem Ausführungsbeispiel der vorliegenden Erfindung nach Fig. 3E.
- Fig. 4: zeigt schematisch einen Pasteurisationsvorgang gemäß einem Ausführungsbeispiel der vorliegenden Erfindung.

### Detaillierte Beschreibung

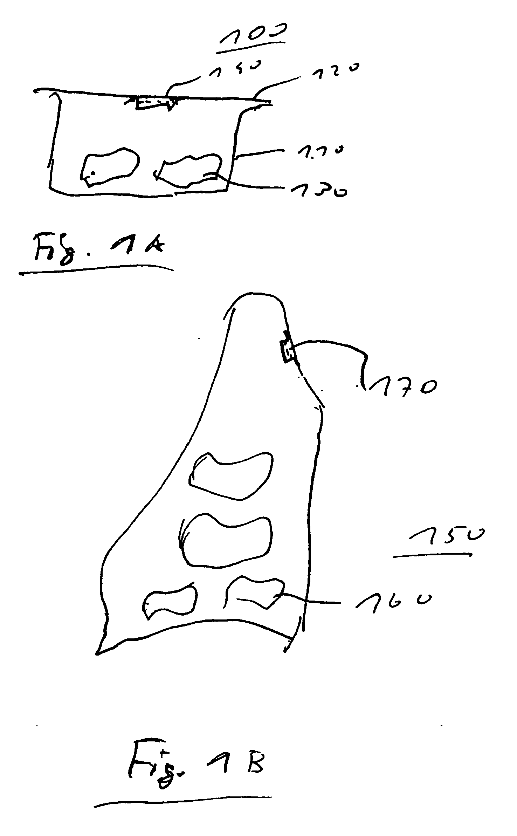

Fig. 1A zeigt schematisch eine Verpackung gemäß einem ersten Ausführungsbeispiel der vorliegenden Erfindung. Die Verpackung 100 besteht aus einem Verpackungsunterteil 110, das eine Schalenform aufweist. Auf diesem Verpackungsunterteil ist eine Deckelfolie 120 angebracht. Bei der Deckelfolie handelt es sich um eine siegelbare Mehrschichtfolie.

Im Inneren der Verpackung befinden sich die Lebensmittel 130, die zur besseren Haltbarmachung pasteurisiert werden sollen.

In der Deckelfolie 120 ist ein Ventil 140 eingearbeitet, das einen Abbau des im Rahmen des Pasteurisationsvorgangs entstehenden Überdrucks ermöglicht.

Eine Variante der Verpackung gemäß Fig. 1A ist in Fig. 1B schematisch dargestellt. Die Verpackung 150 weist dabei Beutelform auf, im Beutel sind die Lebensmittel 160 angeordnet. Daneben ist in dem Beutel in Ventil 170 eingearbeitet, das wie im Falle der Verpackung gemäß Fig. 1A einen Abbau des im Rahmen des Pasteurisationsvorgangs entstehenden Überdrucks ermöglichen soll.

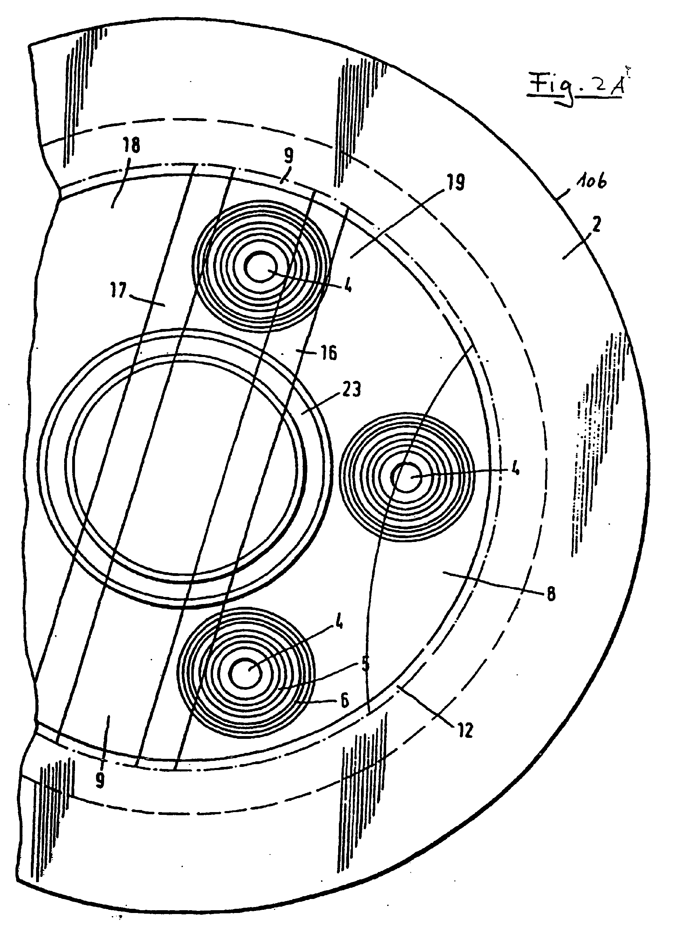

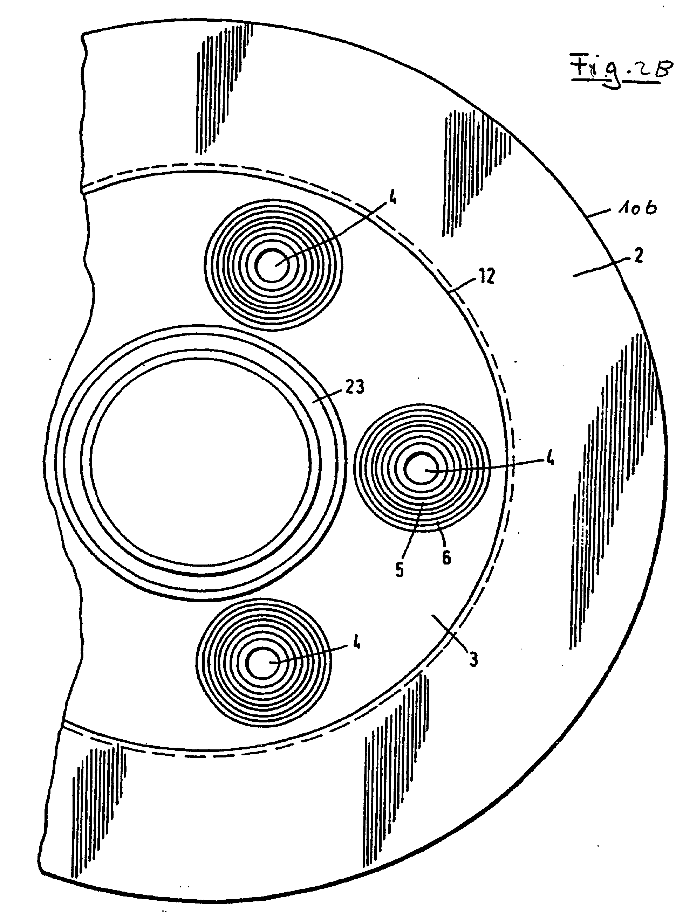

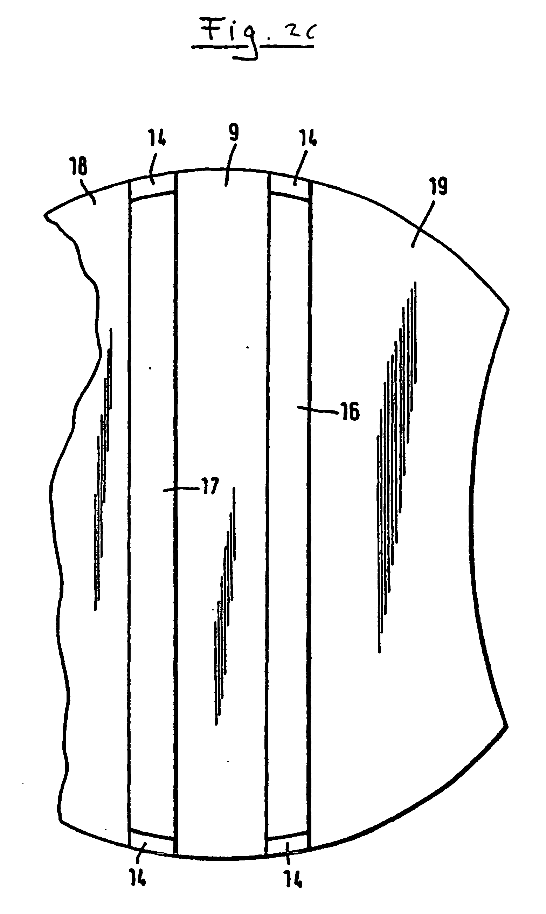

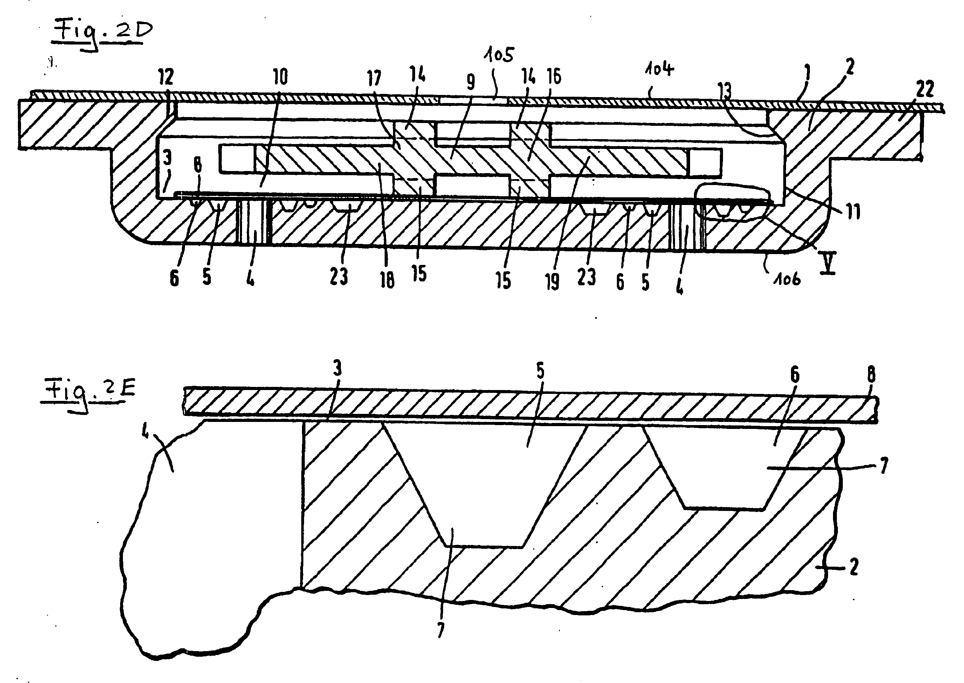

Im folgenden wird auf die Figuren 2A-2E bezug genommen, die ein gemäss einem Ausführungsbeispiel verwendetes Ventil näher erläutern. Weitere Einzelheiten zu diesem Ventil sind aus der EP 0 069 264 B1 oder aus DE 198 43 430 A1 ersichtlich. Es ist anzumerken, daß im Falle der Figur 2A der Ankerteil und die Membrane des Ventils lediglich aus Anschaulichkeitsgründen transparent wiedergegeben sind, damit die darunter befindlichen Elemente sichtbar bleiben.

Das Ventil 106 besteht im wesentlichen aus einem Ventilkörper 2, in welchem auf einer Ventilsitzfläche 3 aufliegend eine Membran 8 angeordnet ist. Die Membran 8 bildet das Schließglied des Ventils.

Der Ventilkörper 2 ist als kreisförmige Scheibe von etwa 2 cm Durchmesser ausgebildet. Die Ventilsitzfläche ist eben ausgebildet und weist eine Anzahl von Bohrungen 4 auf, welche die eine Stirnseite des Ventilkörpers mit der gegenüberliegenden Stirnseite verbinden. Die Bohrungen 4 bilden die Ventilöffnungen des Ventils. Bei dem veranschaulichten Ausführungsbeispiel sind fünf derartige Bohrungen 4 konzentrisch auf einem gemeinsamen Radius um den Mittelpunkt des Ventilkörpers angeordnet.

Jede der Bohrungen 4 ist in der Ventilsitzfläche 3 mit konzentrischen Kanälen 5 und 6 umgeben, welche einen Dichtmittelvorrat 7 (Silikonöl) enthalten. Dieses Dichtmittel 7 bildet einen nicht dargestellten Film auf der gesamten Ventilsitzfläche, welcher sowohl die Unterseite der Membrane 8 als auch die Ventilsitzfläche 3 vollständig benetzt. Die Kanäle 5 und 6 dienen u.a. dazu, als Vorrat nach Betätigung des Ventiles 106 diesen Ölfilm zu ergänzen. Zum gleichen Zwecke kann zusätzlich noch, wie in den Figuren gezeigt, ein konzentrisch um den Mittelpunkt
des Ventilkörpers ausgebildeter Ringkanal 23 vorgesehen sein, welcher ebenfalls mit dem Dichtmittel gefüllt ist.

Der Ventilkörper 2 ist mit einer trogartigen Vertiefung 10 versehen, deren Boden die Ventilsitzfläche 3 bildet. Die Ventilsitzfläche 3 ist hierbei von einer die Seitenwandung der Vertiefung 10 bildenden Nut 11 begrenzt, deren Oberkante durch eine nach innen auf einen geringeren Durchmesser vorspringende Leiste 12 begrenzt wird. Die der Ventilsitzfläche 3 zugewandte Fläche der Leiste 12 ist als nach innen und oben geneigte Schrägfläche 13 ausgebildet.

Der Durchmesser der Membrane 8 ist kleiner als der Durchmesser der Ventilsitzfläche 3 und entspricht dem freien Durchmesser, der durch die Leiste 12 definiert wird.

Die Membrane 8 ist auf der Ventilsitzfläche 3 durch einen Ankerteil 9 festgehalten, welcher lediglich einen mittleren bereich der Membrane 8 gegen die Ventilsitzfläche 3 drückt. Der Ankerteil 9 besteht im wesentlichen aus einem liegenden Doppel-T-Träger 16, 17, welcher mit seitlichen Ansätzen 18, 19 versehen ist, die die Membrane 8 beim eingesetzten Zustand des Ankerteils 9 teilweise überdeckt.

Die beiden Enden des Doppel-T-Trägers 16, 17 sind mit der Schrägfläche 13 entsprechenden Schrägflächen 14, 15 versehen, welche beim Hineindrücken des Ankerteiles 9 hinter der Schrägfläche 13 einrasten können.

Um das Ventil 106 mit der Beutelwandung 104 zu verbinden, weist der Ventilkörper 2 einen nach außen gerichteten Flansch 22 an seiner Oberkante auf, an welchem der Ventilkörper 2 mit der Beutelwandung mediendicht verklebt oder insbesondere verschweißt werden kann.

Der Ventilkörper 2 besteht im Falle des Ausführungsbeispiels vorzugsweise aus Polypropylen, und der Ankerteil 9 ist ebenfalls aus einem thermoplastischen Kunststoff wie Polypropylen, Polyethylen (PE) oder Niederdruckpolyäthylen hergestellt. Eine Ausbildung des Ventils aus Polypropylen ist bevorzugt, weil dann das Ventil besonders einfach mit einer bei Lebensmittelverpackung häufig verwendeten Polypropylen-Deckelfolie verschweisst werden kann.

### Die Funktionsweise des Ventils ist folgendermaßen:

Falls der Außendruck größer ist als der Innendruck, wird die Membrane 8 unter Einfluß des Außendruckes gegen die Ventilsitzfläche 3 gedrückt. Das in den Kanälen 5, 6 und 23 vorhandene Dichtmittel unterstützt hierbei eine einwandfreie Abdichtung.

Falls im Inneren der Verpackung ein Überdruck vorliegt, wird die oberhalb der Bohrungen 4 liegende Fläche der Membran 8 mit Druck beaufschlagt. Sobald der Innendruck einen Wert von einigen wenigen millibar (1 bis 5 millibar) erreicht hat, wird die Membran 8 vom Ventilsitz 3 abgehoben. Da sich beidseitig des Trägers 16, 17 die Membran 8 vollständig frei klappenartig nach oben bewegen kann, reicht ein
geringer Drucküberschuß im Inneren des Behälters aus, diesen Öffnungsvorgang einzuleiten. Die Membrane muß hierbei keinerlei Reibung in radialer Richtung überwinden. Da ferner eine Anzahl von Bohrungen 4 mit dazugehörigen Kanälen 5 und 6 vorgesehen ist, ist es gewährleistet, daß mindestens zwei bis drei Bohrungen 4 in Funktion sind.

Ist der Innendruck des Beutels nach dem Entgasen unter dem Öffnungsdruck abgesunken, legt sich die elastische Membran 8 wieder auf den Ventilsitz 3 auf und dichtet den Innenraum des Behälters erneut gegen die Umgebung ab.

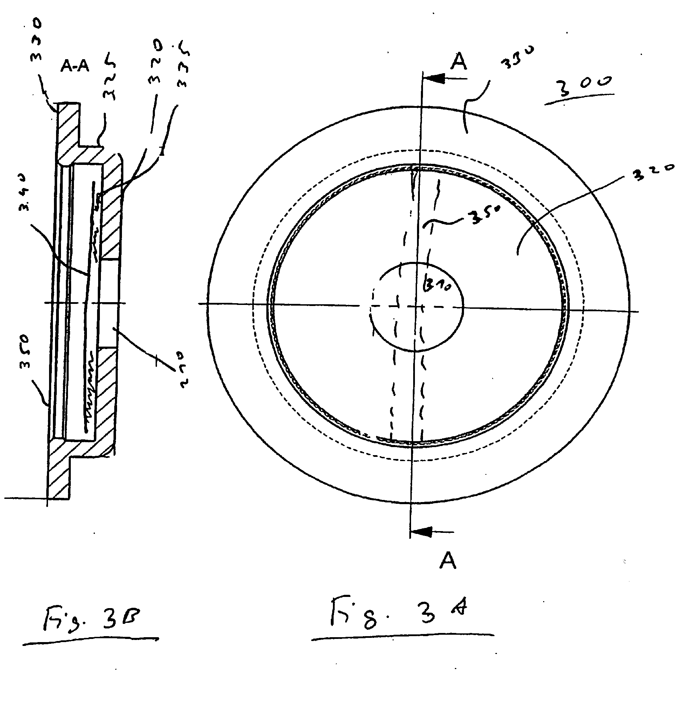

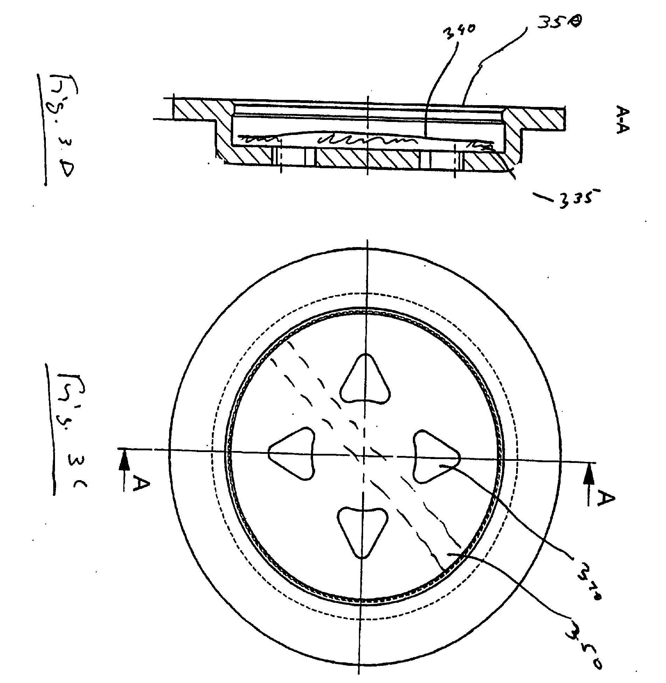

Nachfolgend werden Ventile, die bei weiteren Ausführungsbeispielen der erfindungsgemässen Ventilverpackung Verwendung finden unter Bezugnahme auf Fig. 3A-3F beschrieben.

Fig. 3A zeigt dabei ein erstes Beispiel eines Ventils in einer Draufsicht. Der Ventilkorpus 300 weist in der Mitte ein Loch 310 auf, vom Loch 310 erstreckt sich eine Auflagefläche 320 zur Auflage einer Membran bis hin zu einem Flansch 330, der ein Anbringen des Ventils z.B. auf einer Verpackung ermöglicht.
Ein Herausfallen der Membran aus dem Ventilkorpus wird verhindert durch den Steg 350, der über der Auflagefläche zwischen den gegenüberliegenden Seiten der Seitenwand des Ventils angebracht ist und durch eine Klemmkraft gehalten wird.

Fig. 3B zeigt einen Schnitt durch das in Fig. 3A gezeigte Ventil. In der Schnittansicht von Fig. 3B ist neben der Auflagefläche 320 und dem Flansch 330 auch gut die Seitenwand 325 des Ventilkorpus zu erkennen. Daneben ist in Fig. 2B auch die Membran 340 gezeigt, die auf der Auflagefläche aufliegt. Dabei ist zwischen der Auflagefläche 330 und der Membran 240 ein Dichtungsöl 335 vorgesehen, das sicherstellt, daß das Loch 310 luftdicht verschlossen ist.

Der Steg 350 ist zwischen den Seitenwänden 325 des Ventilkorpus angebracht und soll sicherstellen, daß die Membran 340 nicht aus dem Ventilkorpus herausfallen kann.

Wie in Fig. 3A deutlich zu erkennen ist, weist das Ventil ein vergleichsweise großes Loch in der Mitte der Ventilauflagefläche auf. Der Steg 350 ist so dimensioniert, daß er das Loch nicht vollständig verdeckt. Die Dimensionierung des Stegs kann dabei jedoch durchaus auch so ausfallen, daß das Loch vollständig verdeckt wird, falls der Steg 350 wie in der Schnittansicht von Fig. 3B gezeigt keinen Anpreßdruck auf die Membran ausübt. Übt der Steg einen direkten Anpreßdruck auf die Membran aus, so ist es jedoch bevorzugt, wenn der Steg nicht vollständig über der Lochfläche angeordnet ist, um ein Austreten der Luft durch das Loch und damit einen Abbau des Überdrucks nicht zu behindern.

Fig. 3C zeigt ein weiteres Beispiel eines Ventils. Dabei sind in diesem Beispiel insgesamt vier Löcher 310 vorgesehen, die jeweils in gleichem radialen Abstand vom Ventilmittelpunkt angeordnet sind. Die vier Löcher sind dabei symmetrisch angeordnet, d.h. der Abstand zwischen zwei benachbarten Löchern ist jeweils gleich. In der Ansicht von Fig. 3C ist zu erkennen, dass der Steg 350 sich gerade zwischen den Löchern befindet und so sichergestellt ist, dass er den Austritt des Überdrucks durch keines der Löcher behindert. Die Löcher sind dabei im wesentlichen in Form gleichseitiger Dreiecke ausgebildet, wobei die Ecken der Dreiecke leicht abgerundet sind. Durch diese Form der Löcher ist ein besonders effektiver Abbau des Überdrucks bei gleichzeitig guter Wiederverschlusscharakteristik des Ventils erzielbar.

Eine Querschnittsansicht des Ventils aus Fig. 3C ist in Fig. 3D gezeigt. Auch hier sind der Steg 350, die Membran 340 und das Dichtöl 335 gut zu erkennen.

Schließlich zeigen Fig. 3E und Fig. 3F eine weitere Variante eines Ventils für eine Ventilpasteurisationsverpackung. Aufgrund der ungeraden Anzahl von Löchern ist dabei zwangsweise zumindest immer eines der Löcher zumindest teilweise vom Steg überdeckt wie dies auch aus Fig. 3F erkennbar ist.

Gemäss einem Ausführungsbeispiel sind die Löcher des Ventils in Form von Dreicken mit abgerundeten Ecken ausgebildet, wie dies z. B. in Fig. 3C dargestellt ist.

Die Lochform der in den Figuren 3A bis 3F dargestellten Ventile kann in weiteren Ausführungsbeispielen, die hier nicht graphisch dargestellt sind, beispielsweise auch Kreisform annehmen. Daneben sind auch mehr als fünf Löcher grundsätzlich denkbar. In einem bevorzugten Ausführungsbeispiel weist das Ventil jedoch mindestens drei, vorzugsweise fünf Löcher auf. Gemäss einem weiteren Ausführungsbeispiel ist wie in Fig. 3A gezeigt auch ein Ventil mit lediglich einem Loch möglich.

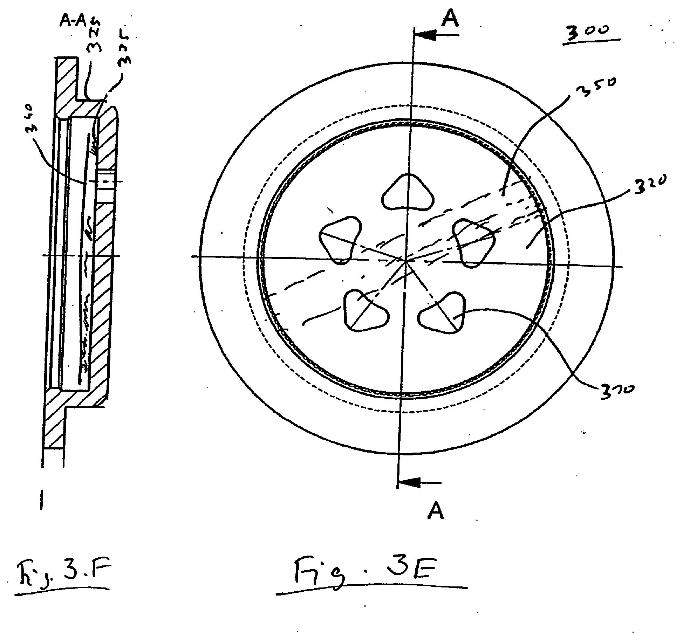

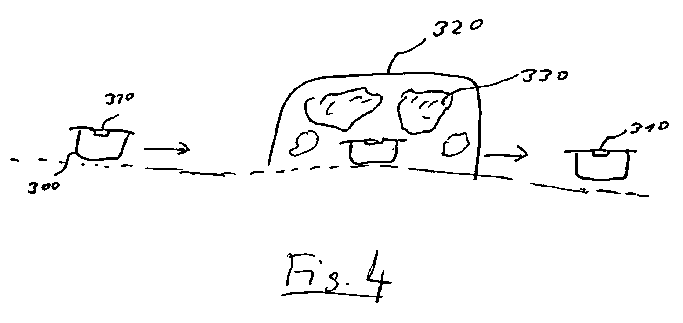

Ein Verfahren zur Pasteurisation gemäß einem Ausführungsbeispiel der vorliegenden Erfindung wird nun nachfolgend unter Bezugnahme auf Fig. 4 beschrieben.

In Fig. 4 wird eine Verpackung 400, die mit einem Ventil 410 gemäß einer der Fig. 2A bis 2E oder 3A bis 3F versehen ist, in eine Tunnelpasteurisationsvorrichtung 320 eingebracht. In dieser Pasteurisationsvorrichtung wird die Verpackung und damit das in der Verpackung enthaltene Lebensmittel erhitzt, vorzugsweise auf einen Bereich von 70°C bis 80°C. Die Erhitzung geschieht dabei unter Enwirkung von Dampf 430. Die Dauer der Erhitzung beträgt dabei einige Minuten bis Stunden, je nach Menge der Lebensmittel und dem Grad der gewünschten Haltbarmachung. Im Rahmen der Erhitzung bildet sich innerhalb der Verpackung400 ein Überdruck, der durch das Ventil 410 nach außen abgegeben werden kann. Ist der Pasteurisationsvorgang beendet und kann sich die Verpackung und das darin enthaltene Lebensmittel wieder abkühlen, weil der Pasteurisationstunnel 420 verlassen wurde, so schließt das Ventil wieder luftdicht und verhindert nach Abbau des Überdrucks ein Eindringen von Außenluft in die Verpackung. Durch das Abkühlen kondensiert ein Teil des im Rahmen des Pasteurisationsvorgangs verdampften Wassers innerhalb der Verpackung 410 und es bildet sich daher ein leichter Unterdruck in der Verpackung. Dieses leichte Vakuum fördert zusätzlich die Haltbarkeit der in der Verpackung 400 verpackten Lebensmittel.

Die Pasteurisation in der Pasteurisationsvorrichtung 420 erfolgt beispielsweise wie in Fig. 3 gezeigt durch Einwirkung von Dampf 430 oder mittels Flüssigpasteurisation durch Berieseln der Verpackung mit Flüssigkeit und damit einhergehendem Erhitzen der Verpackung. Nach dem Pasteurisationsvorgang sind die Lebensmittel in der Verpackung 400 deutlich haltbarer. Ein Umverpacken oder eine Pasteurisation unter Überdruck ist im vorliegenden Fall nicht erforderlich.

Gemäß einem weiteren Ausführungsbeispiel kann die Pasteurisation in der Pasteurisationsvorrichtung 410 unter Anwendung von Mikrowellenstrahlung in einer geeigneten Vorrichtung (nicht gezeigt) erfolgen. Dabei ist jedoch darauf zu achten, daß die Intensität und die Anwendungsdauer der Mikrowellenstrahlen so gewählt wird, daß das Ventil 410 nicht zerstört oder beschädigt wird, so daß es nach erfolgter Pasteurisation wieder vollständig und luftdicht schließen kann. Daneben ist die Mikrowelleneinwirkung so zu dimensionieren, daß der nach erfolgter Pasteurisation entstehende Unterdruck nicht so groß wird, daß die Verpackung 400 zerstört oder völlig deformiert wird.

Nach erfolgter Pasteurisation kann die Verpackung beispielsweise in einem Mikrowellenofen erwärmt werden, wobei bei ausreichender Erhitzung auf mehr als 110°C die Membran des Ventils sich so verformt, daß es nicht mehr vollständig schließen kann. Dadurch kann das Ausbilden eines Vakuums nach dem Mikrowellenkochvorgang verhindert werden.

Gemäß einem bevorzugten Ausführungsbeispiel ist das Material der Membran des Ventils so gewählt, daß im Rahmen des Pasteurisationsvorgangs das Ventil nicht so verändert wird, daß es nicht mehr schließen kann, im Rahmen des Koch- oder Garvorgangs zum Zwecke der Zubereitung der Speisen jedoch das Ventil bzw. seine Membran sich so verändert, daß es nicht mehr völlig schließt. Dadurch kann im ersteren Fall sich ein leichtes Vakuum ausbilden, das die bessere Haltbarkeit unterstützt, im zweiten Fall wird jedoch das Ausbilden eines Vakuums verhindert, um ein Zerstören der Verpackung zu vermeiden.

Als Materialien für die Membran kommen beispielsweise Polyethylenteraphtalat (PET), Polypropylen (OPP), Polyacrylnitril (PAN), oder auch Polyethylennaphtalat in Frage.

Im Falle von PAN oder OPP ist es bevorzugt, wenn die Erwärmung bei der Pasteurisation auf weniger als 80°C erfolgt, da die Verformungstemperatur von PAN ca. 80°C beträgt. Dadurch kann sichergestellt werden, daß bei der Pasteurisation das Ventil nicht so verändert wird, daß es sich nicht mehr schließt, jedoch im Rahmen des Kochvorgangs beispielsweise in einem Mikrowellenofen kann das Ventil so verändert werden, daß es nicht mehr vollständig schließt und damit die Ausbildung eines Vakuums vermieden wird.

Ein weiteres mögliches Material ist PET oder PEN, das sich erst ab 100-110°C wie in Fig. 3 gezeigt durch Einwirkung von Dampf verformt. Der Vorteil von Polyethylenteraphtalat (PET) liegt darin, daß innerhalb der Pasteurisationsvorrichtung 320 eine höhere Pasteurisationstemperatur erreicht werden kann, ohne daß das Ventil zu verformen bzw. dessen Membran, es muß jedoch dann im Rahmen eines Kochvorgangs beispielsweise unter Mikrowelleneinwirkung eine höhere Temperatur erreicht werden (eine höhere Mikrowellenintensität und eine längere Anwendungsdauer), um sicherzustellen, daß das Ventil sich so verändert, daß die Ausbildung eines Vakuums bei Abkühlung nach erfolgtem Garvorgang vermieden wird.

Ein weiteres mögliches Material für die Membranfolie ist Polyethylen, das sich jedoch bereits bei ca. 60-70°C verformt, somit nur eine vergleichsweise niedrige Pasteurisationstemperatur ermöglicht.

Wird Wert darauf gelegt, dass sich das Ventil der Pasteurisationsverpackung im Rahmen der Zubereitung der Speise so verformt, dass ein Wiederverschliessen vermieden wird, so ist eine Membran mit niedrigerer Verformungstemperatur besser geeignet. Allerdings muss dann entsprechend vorsichtig pasteurisiert werden, um zu verhindern, dass bereits im Rahmen des Pasteurisationsvorgangs eine Verformung des Ventils auftritt und das Ventil anschliessend nicht mehr richtig schliesst.

Soll hingegen effizient und schnell pasteurisiert werden, so ist eine Membran mit höherer Verformungstemperatur bevorzugt, bei der unter höherer Temperatur pasteurisiert werden kann. Die Verformung während des Garvorgangs bzw. der Zubereitung der Speisen ist jedoch dann weniger leicht möglich, es ist somit eine grösserer Hitze bei der Zubereitung erforderlich, um die Ventilmembran zu verformen und die Ausbildung eines Vakuums in der Verpackung nach erfolgter Zubereitung zu vermeiden.

Als Ventil kommen wie erwähnt Ventile in Frage, wie sie unter Bezugnahme auf Fig. 2A-2E oder Fig. 3A-3F beschrieben wurden, wobei das Ventil bzw. dessen Korpus vorzugsweise aus Polypropylen ausgebildet ist. Dadurch wird eine besonders einfache und gute Verschweissung des Ventils mit Deckelfolien von Lebensmittelverpackkungen ermöglicht, die häufig Polypropylen als Siegelschicht enthalten. Zudem ist Polypropylen insbesondere im Falle von höheren Temperaturen bevorzugt. Grundsätzlich kommt jedoch auch Polyethylen als Material für den Ventilkorpus in Frage.

Vorzugsweise ist die Lochgeometrie des verwendeten Ventils für die Anwendung der Pasteurisation optimiert. Ein gemäss den Figuren 2A-2E oder 3A-3F verwendetes Ventil weist hierzu ein bis mehrere Löcher auf, deren Gesamtlochquerschnitt zwischen 0,2 und 26 mm beträgt. In einem bevorzugten Ausführungsbeispiel liegt die Gesamtlochquerschnittsfläche bis 1 mm² bis 8 mm², in einem besonders bevorzugten Ausführungsbeispiel bei 3,2 mm².

Der Durchmesser der Ventilmembran liegt dabei vorzugsweise im Bereich zwischen 10 und 25 mm, vorzugsweise zwischen 13 und 17 mm, in einem besonders bevorzugten Ausführungsbeispiel bei 15 mm. Vorzugsweise sind die mehreren Löcher in gleichen Winkeln beabstandet und konzentrisch um den Mittelpunkt angeordnet, um einen möglichst symmetrischen und damit effizienten Abbau des Überdrucks zu ermöglichen.

Der Abstand der Löcher vom Ventilmittelpunkt beträgt vorzugsweise zwischen 2,0 und 6 mm, besonders bevorzugt zwischen 3,0 und 5,5 mm, insbesondere 3,25 mm.

Der Abstand der Löcher vom äusseren Rand der Membran beträgt gemäss einem Ausführungsbeispiel mindestens 1,5 mm, vorzugsweise mindestens 2 mm. Der maximale Abstand vom äusseren Rand der Membran beträgt in einem Ausführungsbeispiel 6 mm, vorzugsweise nicht mehr als 5 mm.

Mit den angeführten Dimensionierungen sowie dem Vorsehen von einem oder mehreren Löchern ergibt sich eine Verpackung, die besonders für den Pasteurisationsvorgang geeignet ist. Sie ermöglicht sowohl das sichere Abbauen des dabei entstehenden Überdrucks als auch ein sicheres Wiederverschliessen nach erfolgter Pasteurisation und die Ausbildung eines leichten Vakkuums zur besseren Haltbarmachung, ohne dass die Verpackung zerstört wird.

## Patentansprüche

1. Verpackung für Lebensmittel, die zum Zwecke des Haltbarmachens einem Pasteurisationsvorgang unterzogen werden sollen, wobei die Verpackung aufweist:
ein die Lebensmittel luftdicht umschließendes Verpackungshauptteil;
ein an dem Verpackungshauptteil angebrachtes Ventil, das dazu ausgebildet ist, bei einem im Rahmen eines Pasteurisationsvorgangs durchgeführten Erhitzens der Lebensmittel den dabei entstehenden Überdruck an die Umgebung zumindest teilweise abzugeben und das nach erfolgter Abkühlung und damit einhergehender Reduzierung des Überdrucks das Verpackungshauptteil wieder luftdicht schließt, wobei das Ventil folgendes aufweist::
einen Ventilkörper;
eine auf dem Ventilkörper angebrachte Membran, wobei zwischen der Membran und dem Ventilkörper ein Dichtungsöl aufgebracht ist, das die Auflagefläche der Membran benetzt und wobei im Ventilkörper ein oder mehrere Löcher angebracht sind, die bei Überdruck ein Entweichen des Überdrucks durch Trennen und Wiederverschliessen der durch die Benetzung zwischen Auflagefläche der Membran und Ventilkörper bestehenden Haltekraft ermöglichen sowie
eine Lochgeometrie, die zum Zwecke der Pasteurisation der in der Verpackung befindlichen Lebensmittel optimiert ist, indem die Gesamtquerschnittsfläche der ein oder mehreren Löcher des Ventils so dimensioniert ist, daß ein sicheres Ableiten des im Rahmen des Pasteurisationsvorgangs bei einer Pasteurisationstemperatur zwischen 60°C und der Siedetemperatur von Wasser, vorzugsweise zwischen 70°C und 100°C, insbesondere zwischen 80°C und 95°C,entstehenden Überdrucks möglich ist, so daß die Verpackung nicht zerstört wird, wobei das Ventil aufweist:
eine Gesamtfläche des Lochquerschnitts der ein oder mehreren Löcher zwischen 0,2 und 26 mm²,
einen Membrandurchmesser zwischen 10 und 25 mm,
einen Ventilkorpus aus Polypropylen.

2. Verpackung nach Anspruch 1, bei der das Verpackungshauptteil eine der folgenden Formen annimmt:
eine Beutelform;
ein schalenförmiges Unterteil und eine auf dem Unterteil angebrachte Deckelfolie.

3. Verpackung nach Anspruch 1 oder 2, wobei das Ventil mindestens eines der folgenden Merkmale aufweist:
einen über der Membran angebrachten Haltesteg, um ein Herausfallen der Membran aus dem Ventilkörper zu verhindern;
einen oder mehrere Kanäle in der Ventilsitzfläche zur Aufnahme eines Dichtungsöls.

4. Verpackung nach Anspruch einem der Ansprüche 1-3, wobei das Ventil eines oder mehrere der folgenden Merkmale aufweist:
eine Gesamtfläche des Lochquerschnitts der ein oder mehreren Löcher zwischen 1 und 8 mm², insbesondere 3,2 mm²;
zwischen 13 und 17 mm, insbesondere 15 mm.

5. Verpackung nach Anspruch 3 oder 4, wobei das Ventil ferner aufweist:
mehr als ein Loch, vorzugsweise drei oder mehr Löcher, wobei die Löcher jeweils den gleichen radialen Abstand vom Ventilmittelpunkt aufweisen, der zwischen 2,5 mm und 6 mm, vorzugsweise zwischen 3,0 mm und 5,5 mm, insbesondere 3,25 mm, vom Ventilmittelpunkt beträgt;
wobei die Löcher jeweils den gleichen Lochquerschnitt aufweisen und zwei benachbarte Löcher jeweils den gleichen Abstand voneinander aufweisen;
wobei der Abstand zwischen einem Loch und dem äußeren Rand der Membran zwischen 1,5 und 6 mm liegt, vorzugsweise zwischen 2 mm und 5 mm liegt;
wobei der Durchmesser eines Lochs zwischen 0,5 und 5,8 mm, vorzugsweise zwischen 0,7 und 2,5 mm, insbesondere 0,9 mm beträgt.

6. Verpackung nach einem der vorhergehenden Ansprüche, wobei
ein oder mehrere Löcher des Ventils nicht kreisförmig, insbsondere in Form von Dreiecken mit abgerundeten Ecken ausgebildet sind.

7. Verpackung nach einem der vorhergehenden Ansprüche, bei dem das Ventil ferner aufweist:
eine Membran aus einem der folgenden Materialien:
ein PET-Film;
einen Polyacrylnitril (PAN)-Film;
einen Polyethylennaphtalat (PEN)-Film.

8. Verfahren zur Pasteurisation von Lebensmitteln, wobei das Verfahren aufweist:
Einbringen einer Verpackung gemäß einem der Ansprüche 1 bis 7 mit darin befindlichen Lebensmitteln in eine Pasteurisationsvorrichtung, um die Lebensmittel durch den Pasteurisationsvorgang und das damit einhergehende Erhitzen haltbarer zu machen, wobei im Rahmen des Pasteurisationsvorgangs sich ein Überdruck ausbildet, der durch das Ventil der Verpackung gemäß einem der Ansprüche 1 bis 7 entweichen kann, um ein Zerstören der Verpackung durch den Pasteurisationsvorgang zu verhindern; und
Abkühlen der Verpackung nach dem Pasteurisationsvorgang und Abbauen des im Rahmen des Pasteurisationsvorgangs entstandenen Überdrucks, wobei sich das Ventil nach Abbau des Überdrucks wieder schließt und damit die Verpackung und die darin befindlichen Lebensmittel luftdicht verschlossen sind.

9. Verfahren nach Anspruch 8, wobei der Pasteurisationsvorgang eine Tunnelpasteurisation umfaßt, bei der die Lebensmittel einer Pasteurisation unter Einwirkung von heißem Dampf oder durch Berieseln mit heißer Flüssigkeit unterzogen wird.

10. Verfahren nach Anspruch 8 oder 9, welches ferner umfaßt:
Erhitzen der Verpackung bzw. der darin befindlichen Lebensmittel auf eine Pasteurisationstemperatur zwischen 60°C und der Siedetemperatur von Wasser, vorzugsweise zwischen 70°C und 100°C, insbesondere zwischen 80°C und 95°C

11. Verfahren nach einem der Ansprüche 8 bis 10, welches ferner umfaßt:
Ausbilden eines leichten Vakuums in der Verpackung durch das Abkühlen nach der Pasteurisation.

12. Verfahren nach einem der Ansprüche 8, 9 oder 11, bei dem das Pasteurisationsverfahren die Anwendung von Mikrowellenstrahlung umfaßt, wobei jedoch die Mikrowellenstrahlung bezüglich ihrer Intensität und der Dauer ihrer Einwirkung so dimensioniert ist, daß eine Erwärmung oder Erhitzung der Lebensmittel nur insoweit erfolgt, daß die Ventilmembran nicht zerstört wird und nach erfolgter Abkühlung wieder vollständig schließen kann.

13. Verfahren nach Anspruch 12, wobei die Mikrowellenstrahlung bezüglich Intensität und Dauer der Anwendung so dimensioniert ist, daß lediglich ein Erhitzen der Lebensmittel auf weniger als die Siedetemperatur von Wasser erfolgt.

## Claims

1. A packaging for foodstuffs which are to undergo a pasteurisation procedure for the purpose of making them keep, the packaging having:
a packaging main part which encloses the foodstuffs in air-tight manner;
a valve which is mounted on the packaging main part and is constructed in order, when the foodstuffs are heated in the course of a pasteurisation procedure, to release to the atmosphere at least in part the positive pressure which is produced during this, and which closes the packaging main part again in air-tight manner once cooling has taken place and the positive pressure has in accordance with this been reduced, the valve having the following:
a valve body;
a membrane mounted on the valve body, with a sealing oil which wets the support surface of the membrane being provided between the membrane and the valve body, and with one or more holes being provided in the valve body which, in the event of positive pressure, make it possible for the positive pressure to escape by separating and sealing again the holding force existing between the support surface of the membrane and the valve body as a result of the wetting, and
a hole geometry which is optimised for the purpose of pasteurisation of the foodstuffs in the packaging, in that the overall cross-sectional surface area of the one or more holes of the valve is dimensioned such that it is possible to dissipate reliably the positive pressure which is produced in the course of the pasteurisation procedure at a pasteurising temperature of between 60°C and the boiling point of water, preferably between 70°C and 100°C, in particular between 80°C and 95°C, such that the packaging is not destroyed, the valve having:
an overall surface area of the hole cross-section of the one or more holes of between 0.2 and 26 mm²,
a membrane diameter of between 10 and 25 mm, and
a valve body made of polypropylene.

2. A packaging according to Claim 1, in which the packaging main part takes one of the following forms:
the form of a bag;
a shell-shaped lower part and a cover film mounted on the lower part.

3. A packaging according to Claim 1 or 2, in which the valve has at least one of the following features:
a holding web which is mounted above the membrane in order to prevent the membrane from falling out of the valve body; one or more channels in the valve seat surface to receive a sealing oil.

4. A packaging according to one of Claims 1 - 3, in which the valve has one or more of the following features:
an overall surface area of the hole cross-section of the one or more holes of between 1 and 8 mm², in particular 3.2 mm²;
of between 13 and 17 mm, in particular 15 mm.

5. A packaging according to Claim 3 or 4, in which the valve further has:
more than one hole, preferably three or more holes, with the holes each having the same radial spacing from the centre point of the valve, this radial spacing being between 2.5 mm and 6 mm, preferably between 3.0 mm and 5.5 mm, in particular 3.25 mm, from the centre point of the valve;
with the holes each having the same hole cross-section and each two adjacent holes having the same spacing from one another;
with the spacing between a hole and the outer rim of the membrane being between 1.5 and 6 mm, preferably between 2 mm and 5 mm;
with the diameter of a hole being between 0.5 and 5.8 mm, preferably between 0.7 and 2.5 mm, in particular 0.9 mm.

6. A packaging according to one of the preceding claims, with
one or more holes of the valve being other than circular, being in particular in the shape of triangles with rounded corners.

7. A packaging according to one of the preceding claims, in which the valve further has:
a membrane made of one of the following materials:
a PET film;
a polyacrylonitrile (PAN) film;
a polyethylene naphthalate (PEN) film.

8. A process for pasteurising foodstuffs, the process including:
introduction of a packaging according to one of Claims 1 to 7 with foodstuffs therein into a pasteurisation device in order to make the foodstuffs keep better as a result of the pasteurisation procedure and the heating in accordance therewith, in the course of the pasteurisation procedure a positive pressure being built up which can escape through the valve of the packaging according to one of Claims 1 to 7 in order to prevent the packaging from being destroyed by the pasteurisation procedure; and
cooling of the packaging after the pasteurisation procedure and letting down of the positive pressure which was produced in the course of the pasteurisation procedure, with the valve closing again once the positive pressure has been let down and hence the packaging and the foodstuffs therein being closed in air-tight manner.

9. A process according to Claim 8, the pasteurisation procedure including a tunnel pasteurisation in which the foodstuffs undergo pasteurisation under the action of hot steam or by being sprinkled with hot liquid.

10. A process according to Claim 8 or 9, which further includes:
heating the packaging and the foodstuffs therein to a pasteurisation temperature of between 60°C and the boiling point of water, preferably between 70°C and 100°C, in particular between 80°C and 95°C.

11. A process according to one of Claims 8 to 10, which further includes:
creating a slight vacuum in the packaging as a result of the cooling after pasteurisation.

12. A process according to one of Claims 8, 9 or 11, in which the pasteurisation procedure includes the use of microwave irradiation, but with the intensity and duration of action of the microwave irradiation being dimensioned such that the foodstuffs are heated or warmed only to the extent that the valve membrane is not destroyed and once cooling has taken place it can close completely again.

13. A process according to Claim 12, with the intensity and duration of application of the microwave irradiation being dimensioned such that the foodstuffs are only heated to a temperature below the boiling point of water.

## Revendications

1. Emballage pour produits alimentaires qui sont destinés à être soumis à un processus de pasteurisation en vue de leur conservation, l'emballage comportant :
- une partie principale entourant de manière étanche à l'air les produits alimentaires ;
- une soupape, qui est agencée sur la partie principale de l'emballage et qui est conçue pour évacuer au moins en partie dans l'environnement la surpression pendant un chauffage des produits alimentaires effectué dans le cadre du processus de pasteurisation, et qui obture à nouveau de manière étanche la partie principale de l'emballage après la mise en oeuvre du refroidissement et donc après la diminution qui en résulte de la surpression, la soupape comportant les éléments suivants :
- un corps de soupape ;
- une membrane posée sur le corps de soupape, une huile d'étanchéité étant déposée entre la membrane et le corps de soupape et humectant la surface d'appui de la membrane, et un ou plusieurs trous étant réalisés dans le corps de soupape, lesquels permettent en cas de surpression une évacuation de la surpression moyennant la séparation et le rétablissement de la force de retenue existant sous l'effet de l'humidification entre la surface d'appui de la membrane et le corps de soupape, ainsi que
- une géométrie des trous, qui est optimisée en vue de la pasteurisation des produits alimentaires contenus dans l'emballage, du fait que la surface de section totale de l'un ou de plusieurs trous de la soupape est dimensionnée de manière à permettre une évacuation sûre de la surpression générée dans le cadre du processus de pasteurisation avec une température de pasteurisation entre 60°C et la température d'ébullition de l'eau, de préférence entre 70°C et 100°C, en particulier entre 80°C et 95°C, de telle sorte que l'emballage n'est pas endommagé, la soupape ayant :
- une surface totale de la section de l'un ou de plusieurs trous entre 0,2 et 26 mm²,
- un diamètre de membrane entre 10 et 25 mm,
- un corps de soupape en polypropylène.

2. Emballage selon la revendication 1, dans lequel la partie principale de l'emballage a l'une des formes suivantes :
une forme de sachet,
une partie de base en forme de coque et un film de recouvrement posé sur la partie de base.

3. Emballage selon la revendication 1 ou 2, dans lequel la soupape comporte au moins une des caractéristiques suivantes :
- un rebord de retenue agencé au-dessus de la membrane, afin d'empêcher que la membrane puisse tomber hors du corps de soupape,
- un ou plusieurs canaux dans la surface du siège de soupape pour recevoir une huile d'étanchéité.

4. Emballage selon l'une quelconque des revendications 1 à 3, dans lequel la soupape comporte une ou plusieurs des caractéristiques suivantes :
- une surface totale de la section de l'un ou de plusieurs trous entre 1 et 8 mm², en particulier 3,2 mm²,
entre 13 et 17 mm, en particulier 15 mm.

5. Emballage selon la revendication 3 ou 4, dans lequel la soupape comporte en outre :
- plus d'un trou, de préférence trois trous ou plus, les trous ayant chacun la même distance radiale par rapport au centre de la soupape, laquelle distance se situe entre 2,5 mm et 6 mm, de préférence entre 3,0 mm et 5,5 mm, en particulier 3,25 mm du centre de la soupape,
- les trous ayant chacun la même section et deux trous voisins étant dans chaque cas situés à même distance l'un de l'autre,
- la distance entre un trou et le bord extérieur de la membrane se situant entre 1,5 et 6 mm, de préférence entre 2 et 5 mm,
- le diamètre d'un trou se situant entre 0,5 et 5,8 mm, de préférence entre 0,7 et 2,5 mm, en particulier 0,9 mm.

6. Emballage selon l'une quelconque des revendications précédentes, dans lequel un ou plusieurs trous de la soupape sont réalisés sous forme non circulaire, en particulier sous forme triangulaire avec des angles arrondis.

7. Emballage selon l'une quelconque des revendications précédentes, dans lequel la soupape comporte en outre :
- une membrane réalisée dans l'un des matériaux suivants :
un film en polyéthylène téréphtalate (PET) ;
un film en polyacrylnitrile (PAN) ;
un film en polyéthylène naphtalate (PEN).

8. Procédé de pasteurisation de produits alimentaires, le procédé comportant :
- l'introduction d'un emballage selon une des revendications 1 à 7 contenant des produits alimentaires dans un dispositif de pasteurisation, en vue d'assurer la conservation des produits alimentaires par le processus de pasteurisation et le chauffage inhérent à celui-ci, une surpression étant générée dans le cadre du processus de pasteurisation, laquelle peut s'échapper par l'intermédiaire de la soupape de l'emballage selon une des revendications 1 à 7, afin d'empêcher un endommagement de l'emballage par le processus de pasteurisation ; et
- le refroidissement de l'emballage après le processus de pasteurisation et suppression de la surpression générée dans le cadre du processus de pasteurisation, la soupape se fermant à nouveau après la suppression de la surpression et obturant ainsi de manière étanche à l'air l'emballage et les produits alimentaires contenus dans celui-ci.

9. Procédé selon la revendication 8, dans lequel le processus de pasteurisation englobe une pasteurisation sous tunnel, dans laquelle les produits alimentaires sous soumis à une pasteurisation sous l'effet de la vapeur chaude ou par arrosage avec un liquide chaud.

10. Procédé selon la revendication 8 ou 9, qui comporte en outre :
le chauffage de l'emballage et des produits alimentaires contenus dans celui-ci à une température de pasteurisation entre 60°C et la température d'ébullition de l'eau, de préférence entre 70°C et 100°C, en particulier entre 80°C et 95°C.

11. Procédé selon l'une quelconque des revendications 8 à 10, qui comporte en outre :
la production d'un léger vide dans l'emballage moyennant le refroidissement après la pasteurisation.

12. Procédé selon l'une des revendications 8, 9 ou 11, dans lequel le procédé de pasteurisation comporte l'application d'un rayonnement de micro-ondes, le rayonnement de micro-ondes étant dimensionné cependant sur le plan de son intensité et de la durée de son action, de telle sorte qu'un réchauffement ou chauffage des produits alimentaires est effectué uniquement à tel point que la membrane de la soupape ne soit pas endommagé et qu'elle puisse à nouveau obturer complètement après la mise en oeuvre du refroidissement.

13. Procédé selon la revendication 12, dans lequel le rayonnement de micro-ondes est dimensionné sur le plan de l'intensité et de la durée d'action, de telle sorte qu'un chauffage des produits alimentaires est effectué à une température inférieure à la température d'ébullition de l'eau.
